(19) Europäisches Patentamt
European Patent Office
Office européen des brevets

(11) Publication number: **0 428 124 A1**

# (12) EUROPEAN PATENT APPLICATION

(21) Application number: **90121669.7**

(51) Int. Cl.[5]: **C09D 167/06**, C08F 2/50

(22) Date of filing: **13.11.90**

(30) Priority: **15.11.89 IT 2238789**

(43) Date of publication of application:
**22.05.91 Bulletin 91/21**

(84) Designated Contracting States:
**AT BE CH DE DK ES FR GB GR IT LI LU NL SE**

(71) Applicant: **OECE Industrie Chimiche Spa**
**via Volturno 96**
**I-41032 Cavezzo (Modena)(IT)**

(72) Inventor: **Vernizzi, Giorgio**
**Via Carbonari, 47**
**I-41100 Modena(IT)**
Inventor: **Raffellini, Peppino**
**Via della Libertà, 20**
**I-41032 Cavezzo (Modena)(IT)**
Inventor: **Trevisan, Lucio**
**Via Galimberti, 9**
**I-43100 Parma(IT)**
Inventor: **Ferretti, Milco**
**Via Cavour, 143**
**I-41032 Cavezzo(IT)**
Inventor: **Benatti, Gastone**
**Via Gavioli, 132**
**I-41032 Cavezzo(IT)**

(74) Representative: **Gervasi, Gemma et al**
**NOTARBARTOLO & GERVASI Srl Viale**
**Bianca Maria 33**
**I-20122 Milan(IT)**

## (54) Pigmented painting products suited to provide corrugated surfaces.

(57) High-pigmentation painting products, cross-linkable by means of ultraviolet-redox systems, to provide decorative-effect corrugated surfaces, consisting of dispersions of organic solvents of physical drying resins, resins and/or prepolymers and/or monomers exhibiting unsaturations of the ethylene type, photostarters characterized by the presence of an optionally substituted benzoyl group, salts of organic acids of transition metals or of metals of groups III A and IV A of the Periodic Table soluble in the reaction system and capable of forming, with peroxides, an oxido-reducing couple, pigments and/or fillers, and a process for preparing said corrugated-effect paints.

EP 0 428 124 A1

Xerox Copy Centre

# PIGMENTED PAINTING PRODUCTS SUITED TO PROVIDE CORRUGATED SURFACES

## Field of invention

The present invention relates to high-pigmentation painting products, which are cross-linkable by means of ultraviolet-redox systems, thereby providing decorative-effect corrugated surfaces, said products consisting of combinations of polymeric binders, monomers and oligomers of various nature, and to a process for preparing said paints.

## Background of the invention

Low pigmentation painting products, cross-linkable by means of ultraviolet radiation are known. High-pigmentation painting products cross-linkable by means of ultraviolet-redox systems are known as well. In both cases, conventional smooth surfaces are obtained, the decorative effect of which is given only by the color and not by particular surface structures (texturizations).

## Summary of the invention

The present invention relates to painting products having a high pigmentation degree, suitable for being cross-linked by means of ultraviolet-redox systems, thereby providing corrugated surfaces, said products consisting of homogeneous dispersions, in organic solvents of physical-drying resins soluble in said solvents, resins having ethylenically unsaturated groups and/or prepolymers having the same type of unsaturation and/or unsaturated monomers of the vinyl, acryl or allyl type, photostarters exhibiting an optionally substituted benzoyl group, salts of organic acids of transition metals or of groups III A and IV A of the Periodic Table soluble in said solvent and capable of providing, with peroxides, an oxido-reducing couple and, finally, pigments and/or fillers.

The invention relates also to a process for preparing, by cross-linking the abovesaid painting products, surfaces endowed with original decorative effects in relief.

## Detailed description of the invention

New painting products have been found - and they form an object of the present invention - which are suitable for being cross-linked by means of ultraviolet-redox systems, and permit to obtain highly pigmented films which exhibit original decorative effects in relief. The painting products according to the invention consist of dispersions in an organic solvent of

a) physical-drying polymers soluble in the solvent;

b) resins having ethylenically unsaturated groups and/or prepolymers and/or monomers having the same type of unsaturations;

c) photostarters exhibiting the benzoyl group

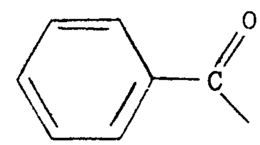

optionally substituted;

d) salts of organic acids of transition metals or of metals of groups III A and IV A soluble in the reaction system, capable of forming with peroxides an oxido-reducing couple;

e) pigments and/or fillers.

The physical drying polymers present in the painting products of the invention are polymers soluble in organic solvents, which, by solution evaporation, provide films, and are selected from nitrocellulose, acetobutyrrate, vinyl, acrylic, polyvinylbutyral derivatives etc.. As examples, the following commercial products can be cited: VAGH and VYHH (Union Carbide), Cellit (Bayer), CAB (Eastman Kodak), nitrocellulose polymers, produced by Sipe-Nobel, Wolff, Hagedorn, I.C.I. and Hercules.

The unsaturated resins utilized herein are generally unsatured polyesters, easily available on the market, such as the well known Roskydal products (type 300, 500A, 502, 850w) produced by Bayer or Waloran (type 2101, 6002) produced by Wolff-Walsrode.

The unsaturated prepolymers utilized are as well products available on the market, such as epoxyacrylic prepolymers Ebecryl produced by U.C.B. (type 604, 1604, 1608), urethaneacrylic prepolymers Ebecryl (type 210, 270), polyesteracrylate prepolymers Ebecryl (type 810, 850, 1810).

Non-limitative examples of unsaturated monomers optionally utilized in association with resins and/or prepolymers are: ethylacrylate, 1,6-hexandioldiacrylate, diethyleneglycol diacrylate, diethyleneglycolbisallylethercarbonate, trimethylolpropanetriacrylate, styrene, vinylacrylate, vinylpyrrolidone, trimethylolpropanediallylether, vinylcarbazole.

The photostarters containing the benzoyl group are selected from thioxanthone, acetophenone, benzophenone, benzoine, acylphosphine oxide derivatives.

The soluble salts of organic acids of metals are preferably octanoates, benzoates and naphthenates of cobalt, chrome, led, zinc, manganese, copper, iron and cerium. Furthermore, it is possible to use soluble salts of titanium, zirconium, vanadium, hafnium, niobium, aluminium and thallium. An essential feature is that these salts should be capable of forming, along with peroxides, an oxido-reducing couple.

The pigments may be all those usually employed, such as titanium dioxide, carbon black, colored pigments, phthalocyanines, metal oxides. Also the fillers are the ones which are usually utilized, for example kaolin, talc, silica, calcium carbonate.

Both the pigments and the fillers are preferably dispersed in the unsaturated resin and/or in the prepolymer and/or in the monomer. The weight ratio between the physical-drying polymers and the unsaturated components is in the range of from 0.05 to 1.0, preferably from 0.1 to 0.2.

The photostarters are utilized in amounts varying from 0.1 to 10% by weight calculated on the unsaturated products, and preferably in amounts ranging from 2 to 5%.

The pigment amount varies as a function of the type and of the hiding power of the same, but at any rate it must be such as to prevent a deep cross-linking, by blocking the ultraviolet radiations in the surface layers.

The weitht ratio between the photostarters and the soluble salts of metals ranges from 2 to 10, preferably from 4 to 7.

The utilized organic solvents are selected from aromatic hydrocarbons, preferably toluene, esters of acetic or propionic acid, preferably ethyl acetate, and ketones, preferably methylethylketone. Mixtures of more solvents can be advantageously utilized.

The above-mentioned painting products are applied onto the substrate to be painted according to a process, which too is an object of the present invention.

The substrate is spread with a solution of organic peroxide and physical drying resin, preferably a nitrocellulose resin, in an organic solvent, preferably ethylacetate, in an amount equal to 1-3 g of peroxide per sq. meter; the so treated substrate is subjected to heating to 40-50 °C for 60-100 seconds, whereafter the painting product of the invention is applied in an amount ranging from 100 to 200 g/sq.m of wet film, corresponding to 50-100 microns of dry film. A flash-off time of 40-120 seconds at a temperature of 20-30 °C follows, then the product is subjected to ultraviolet radiation by high-power lamps (80-120 W/cm) at a speed of 6-12 m/minute corresponding to a time of 10-20 seconds.

Finally, paint drying is completed either leaving the panels during 12 hours at room temperature in a ventilated place or placing them into a 45-55 °C furnace with a hot air circulation system for 50-80 minutes.

After said stretch of time the panels may be stacked.

In this manner it is possible to obtain corrugates, deep-hardened surfaces exhibiting a good adhesion to the substrate. The obtainment of the corrugated effect is based on the starting and partial physical drying of the film followed by ultraviolet irradiation which, thanks to the high pigmentation which shields and prevents a deep cross-linking, acts only on the surface layers, thereby causing tensioning of the film with consequent relief effect.

The deep hardnening and the good adhesion of the film to the substrate are achieved thanks to the redox-type mechanism, due to the combination of the metal organic salts which are present in the painting compositions of the invention and of the organic peroxides which had been previously distributed on the substrate.

The utilized peroxides are selected from methylethylketone peroxide, cyclohexanoneperoxide, benzoyl peroxide, acetylacetone peroxide, cumene hydroperoxide, terbutyl, etc., percarbonates, peresters, etc. The molar ratio between the organic peroxide and the salt of organic acid of transition metal or of groups III A and IV A ranges from 1 to 15 and preferably from 4 to 9.

The painting compositions and the corresponding process for their application, which form the object of the present invention, offer the advantage of simplifying the painting cycle which, owing to the high filling effect caused by the film corrugation, can be carried out in a single phase and can have a high productivity, and also offers the advantage of permitting the use of non-valuable substrates such as particle or fibre panels, manufactured using waste wooden materials, so avoiding to depauperate the wood patrimony, what would involve well-known ecological implications.

The following examples are given to illustrate the invention in detail, without limiting however, the scope thereof.

Example 1

White painting product applied by means of a curtain coater.

380 g of an unsaturated polyester resin, type Roskydal 502 (Bayer) and 120 g of rutile titanium dioxide, previously dispersed in a portion of said

resin, were mixed with 75 g of a nitrocellulose polymer, type Hacolor (Hagedorn), dissolved in 250 g of ethylacetate. 100 g of styrene and 70 g of toluene containing 5 g of cobalt naphthenate were added.

Thereafter, 15 g of 2,4,6-trimethylbenzoyl diphenylphosphine oxide and 10 g of 1,2-diphenyl-2,2-dimethoxyethanone dissolved in ethylacetate were added.

It was stirred until obtainment of a complete and homogeneous suspension, which was optionally brought to a viscosity of 30-35 seconds (No. 4 Ford cup) (ASTM method D-1200-82) by addition of ethylacetate.

In the fibre panels, treated with melaminic paper, a solution containing 10% of cyclohexanoneperoxide and 10% of Hacolor nitrocellulose (Hagedorn) dissolved in ethylacetate, was then applied by means of a roller coater in an amount of 10 g/sq.m.

The panels so treated were heated to 40 °C for 60 seconds by means of air circulation, whereafter, by means of a curtain coater the above-defined paint was applied in an amount of about 120 g/sq.m. Finally, the panels were subjected to the following drying cycle:

- 50 seconds at room temperature;
- 15 seconds of U.V. irradiation by means of high power lamps (100 W/cm);
- 12 hours at room temperature in a ventilated environment.

Thus, a well polymerized, hard and substrate-adhering film was obtained, which exhibited a considerable decorative effect in relief.

## Example 2

White painting product applied by means of a curtain coater.

350 g of an unsaturated polyester resin of the Roskydal type 500 A (Bayer) and 150 g of rutile titanium dioxide, previously dispersed in a portion thereof, were admixed to 70 g of a vinyl copolymer of the VAGH type (Union Carbide) dissolved in 150 g of methylethylketone and 150 g of toluene.

100 g of styrene and 3 g of cobalt octonoate dissolved in 27 g of butyl acetate were then added.

10 g of 1,2-diphenyl-2,2-dimethoxyethanone and 10 g of 2-hydroxy-2-methylphenylpropanone dissolved in ethylacetate were added.

Stirring was continued until thorough mixing, then the whole was optionally brought to a viscosity of 30-35 seconds (No. 4 Ford cup) by addition of ethylacetate.

On plastered particle panels there was applied by means of a roller, to obtain a weight of 15 g/sq.m., a solution containing 15% of cyclohexanone peroxide and 10% of Hacolor nitrocellulose (Hagedorn) dissolved in ethylacetate; the panels so treated were then heated to 45 °C for 70 seconds.

The painting product so prepared was applied to the panels by means of a curtain coater in an amount of about 120 g/sq.m. Finally, the painted panels were subjected to the following drying cycle:

- 70 seconds at room temperature with air circulation;
- 20 seconds of ultraviolet irradiation by means of high power lamps (80-120 W cm);
- 60 minutes at 50 °C with hot air circulation.

A well hardened and substrate-adhering film exhibiting a corrugated decorative effect was so obtained.

## Example 3

Black painting product applied by means of a curtain coater.

340 g of an unsaturated polyester resin, type Roskydal 502 (Bayer) and 7 g of carbon black, previously dispersed in a portion thereof, were mixed with 100 g of a nitrocellulose resin, type Norma 34 E (Sipe Nobel) dissolved in 300 g of ethylacetate.

150 g of styrene and 3 g of cobalt octanoate dissolved in 100 g of toluene were added.

Subsequently, 10 g of 2,4,6-trimethylbenzoyl-diphenylphosphine oxide and 10 g of 1,2-diphenyl-2,2-dimethoxyethanone dissolved in ethylacetate were added.

Stirring was carried on until obtainment of a complete and homogeneous dispersion, which was then brought to a viscosity of 30- 35 seconds (No. 4 Ford cup) by optionally adding ethylacetate.

Onto the MDF panels treated with melamine paper, about 10 g/sq.m. of a solution containing 10% of acetylacetoneperoxide and 10% of Hacolor nitrocellulose (Hagedorn) dissolved in ethylacetate were applied by means of a roller.

The panels were heated for 60 seconds at 45 °C, whereafter, by means of a curtain coater, the above-described paint was applied in an amount of about 120 g/sq.m. The painted panels were last subjected to the following drying cycle:

- 50 seconds at room temperature in a ventilated environment;
- 20 seconds of U.V. irradiation by means of high power lamps (100 W/cm);
- 60 minutes at 55 °C with hot air circulation.

Thus, a black, well-hardened and substrate-adhering film, exhibiting decorative effects in relief, was obtained.

Example 4

Black painting product applied by spraying.

370 g of an unsaturated polyester resin, type Roskydal 300 (Bayer) and 10 g of carbon black, previously dispersed in a portion thereof, were mixed with 80 g of a vinyl resin, type VAGH (Union Carbide), dissolved in 150 g of methylisobutyl ketone and 130 g of toluene. 150 g of styrene and 5 g of cobalt octanoate dissolved in 105 g of toluene were added. 20 g of 2-methyl-2-hydroxyphenylpropanone and 5 g of 2-chlorothioxanthone dissolved in tetrahydrofuran were then added. Stirring was carried on until obtainment of a complete and homogeneous dispersion, which was then brought to a viscosity of 20-25 seconds (No. 4 Ford cup) by addition of ethylacetate.

To the plastered wood-shaving panels, 15 g/sq.m. of a solution containing 15% of cyclohexanoneperoxide and 10% of Hacolor nitrocellulose (Hagedorn) dissolved in ethylacetate were applied by means of a roller.

The panels were heated for 80 seconds at 45 °C, whereafter the paint in question was spray-applied on them in an amount of about 150 g/sq.m. The painted panels were subjected, finally, to the following drying cycle:

- 5 minutes at room temperature in a ventilated environment;
- 15 seconds of U.V. irradiation by means of high power lamps (100 W/cm);
- 12 hours at a temperature of 25-30 °C with air circulation.

A corrugated, hard and substrate-adhering film was obtained.

Example 5

Black painting product applied by means of a roller.

440 g of an unsaturated polyester resin, type Roskydal 500 A and 10 g of carbon black, previously dispersed in a portion thereof, were mixed with 80 g of vinyl resin, type VAGH (Union Carbide) dissolved in 150 g of methylisobutylketone and 130 g of toluene. Subsequently, 5 g of cobalt octanoate dissolved in 35 g of toluene and 150 g of styrene were added.

Furthermore, 15 g of 2,4,6-trimethylbenzoyldiphenylphosphine oxide and 10 g of 2-hydroxy-2-methylphenylpropanone dissolved in ethylacetate were added.

Stirring was carried on till obtaining a complete and homogeneous dispersion.

Onto the fibre panels treated by means of melamine paper, a solution containing 20% of cyclohexanoneperoxide and 10% of Hacolor nitrocellulose (Hagedorn) dissolved in ethylacetate, was applied by means of a roller, in an amount of 15 g/sq.m. The panels were then heated at 45 °C for 60 seconds, then, by means of a roller, the abovesaid paint was applied thereonto in an amount of about 100-110 g/sq.m. The painted panels were subjected, last, to the following drying cycle:

- 40 seconds at room temperature;
- 15 seconds of U.V. irradiation by means of high-power U.V. lamps (100 W/cm);
- 70 minutes in an oven at 50 °C with hot air circulation.

A film in relief, well hardened and adhering to the substrate, was so obtained.

Example 6

White painting product applied by spraying.

370 g of an unsaturated polyester resin, type Roskydal 500 A (Bayer) and 130 g of titanium dioxide, previously dispersed in a portion thereof, were mixed with 80 g of a nitrocellulose resin, type Hacolor (Hagedorn) dissolved in 250 g of butyl acetate. 5 g of cobalt naphthenate dissolved in 35 g of toluene and 130 g of styrene were added.

Then, 15 g of 2,4,6-trimethylbenzoyldiphenylphosphine oxide and 10 g of 1,2-diphenyl-2,2-dimethoxyethanone dissolved in ethylacetate were added.

Stirring was carried on till obtaining a complete and homogeneous suspension, which was brought to a viscosity of 20-25 sec. (No. 4 Ford cup) by addition of ethylacetate.

15 g/sq.m of a solution containing 15% of acetylacetone peroxide and 10% of nitrocellulose Hacolor (Hagedorn) dissolved in ethylacetate were roller-applied onto plastered MDF panels.

The panels were then heated to 45 °C for 80 seconds, then the above-described paint was applied thereon. The painted panels were subjected to the following drying cycle:

- 5 minutes at room temperature with air circulation;
- 20 seconds of U.V. irradiation by means of high power lamps (120 W/cm);
- 12 hours at room temperature in a ventilated environment.

A decorative film in relief, well adhering to the substrate and well surface-hardened was thus obtained.

Example 7

White painting product applied by means of a curtain coater.

500 g of an unsaturated polyester resin, type Roskydal 502 (Bayer) and 50 g of titanium dioxide rutile, previously dispersed in a portion of said resin, were mixed with 70 g of a VAGH type vinyl copolymer (Union Carbide) dissolved in 150 g of methylethylketone and 100 g of isobutylacetate.

Then, there were added 100 g of styrene and 3 g of zirconium butylate and 2 g of zinc octanoate dissolved in 25 g of butyl acetate.

10 g of 1,2-diphenyl-2,2-dimethoxyethanone and 10 g of 2,4,6-trimethylbenzoyl-diphenylphosphine oxide dissolved in ethylacetate were added.

Stirring was continued till obtaining a complete and homogeneous dispersion, the viscosity thereof was then brought to 30-35 seconds (No. 4 Ford cup) by optionally adding ethylacetate.

A solution containing 15% of methylethylketone peroxide and 8% of a nitrocellulose polymer, type Hacolor (Hagedorn), dissolved in ethylacetate were roller-applied onto plastered MDF panels.

It was heated to 45° C for 70 seconds, then by means of the curtain coater, the above-described paint was applied in an amount of about 120 g/sq.m and it was subjected to the following drying cycle:

- 60 seconds at room temperature in a ventiled place;
- 20 seconds of U.V. irradiation by means of high power lamps (120 W/cm);
- 70 minutes at 50° C with hot air circulation.

A white decorative film in relief well hardened and adhering to the substrate was obtained.

## Example 8

Black painting product applied by spraying

360 g of an unsaturated polyester resin, type Roskydal 300 (Bayer) and 15 g of carbon black, previously dispersed in a portion of said resin, were mixed with 140 g of a nitrocellulose polymer, type Norma 34 E (Sipe Nobel), dissolved in 150 g of ethyl acetate and 150 g of methylisobutylketone.

150 g of styrene monomer along with 5 g of manganese octanoate dissolved in 30 g of toluene were then added.

Stirring was conducted for 10 minutes, whereafter 20 g of 1,2-diphenyl-2,2-dimethoxyethanone and 5 g of 2-chlorothioxanthone dissolved in tetrahydrofuran were then added.

Stirring was carried on until obtainment of a complete and homogeneous dispersion, which was then brought to a viscosity of 20-25 seconds (No. 4 Ford cup) optionally by adding ethylacetate.

15 g/sq.m of a solution containing 15% of methylethylketone peroxide and 8% of a nitrocellulose polymer, type Hacolor (Hagedorn) dissolved in ethylacetate were then roller-applied onto plastered fibre panels. It was heated for 80 seconds at 45° C, whereafter the paint in question was spray-applied in an amount of about 150 g/sq.m, then it was subjected to the following drying cycle:

- 10 minutes at room temperature in a ventilated place;
- 15 seconds of U.V. irradiation by means of high power lamps (80-120 W/cm);
- 70 minutes in a furnace at 50° C with hot air circulation.

A film in relief, well hardened and substrate-adhering was obtained.

## Example 9

Red product applied by means of a curtain coater

400 g of an unsaturated polyester resin, type Roskydal 300 (Bayer) and 40 g of red pigment, type PE-SICO ROSSO L (BASF), previously dispersed in a portion of said resin, were mixed with 100 g of a nitrocellulose polymer, type Hacolor (Hagedorn) dissolved in 300 g of methylethylketone.

130 g of styrene monomer were then added, and successively 3 g of manganese octanoate and 2 g of cobalt octanoate dissolved in 25 g of ethylacetate.

Finally 20 g of 1-2 diphenyl-2,2 dimethoxyethanone and 10 g of 1 phenyl-2-idroxy-2-methylpropanone dissolved in ethylacetate were added.

The whole was stirred until obtaining a complete and homogeneous dispersion, which was then brought to a viscosity of 30-35 seconds (No. 4 Ford cup) by optional addition of ethylacetate.

Onto the plastered particle panels there were roller-applied 15 g/sq.m. of a solution containing 15% of methylethylketone peroxide and 8% of a nitrocellulose polymer, type Hacolor (Hagedorn) dissolved in ethylacetate.

It was heated for 70 seconds at 45° C, whereafter, by means of the curtain coater, the above-described paint was applied in an amount of 110 g/sq.m, and was subjected to the following drying cycle:

- 60 seconds at room temperature in a ventilated place;
- 20 seconds of U.V. irradiation by means of high power lamps (100 W/cm);
- 70 minutes at 50° C with hot air circulation.

A red film in relief, well hardened and substrate-adhering was so obtained.

## Example 10

Red painting product applied by spraying

400 g of an unsaturated polyester resin, type Roskydal 502 (Bayer) and 50 g of a red pigment of the type PE-SICO ROSSO L (BASF), previously dispersed in a portion of said resin, were mixed with 90 g of a VAGH type vinyl resin (Union Carbide) dissolved in 150 g of methylethylketone and 100 g of ethylacetate.

100 g of styrene, 70 g of N-vinylpyrrolidone and 5 g of cobalt octanoate dissolved in 35 g of ethylacetate were added.

After a short-lasting stirring, 15 g of 2-methyl-2-hydroxyphenylpropanone and 10 g of 1,2-diphenyl-2,2-dimethoxyethanone dissolved in ethylacetate were added.

Stirring was carried on until obtainment of a complete and homogeneous dispersion, whereafter it was brought to a viscosity of 20-25 seconds (No. 4 Ford cup) by means of an optional addition of ethylacetate.

Onto the MDF panels treated with melamine paper 15 g/sq.m of a solution containing 20% of acetylacetonperozide and 8% of Hacolor nitrocellulose polymer (Hagedorn) dissolved in ethylacetate were applied by means of a roller.

It was heated for 70 seconds at 50° C, then the above-defined paint was spray-applied in an amount of about 150 g/sq.m and was subjected to the following drying cycle:

- 7 minutes at room temperature in a ventilated place;
- 25 seconds of U.V. irradiation by means of a high power lamp (120 W/cm);
- 12 hours at room temperature with air circulation.

A hard, substrate-adhering film in relief was obtained.

## Claims

1. Pigmented painting products, suited to be cross-linked by means of ultraviolet-redox systems to provide corrugated surfaces, consisting of homogeneous dispersions in organic solvents of:

a) physical-drying polymers soluble in said solvents;

b) resins having ethylenically unsaturated groups and/or prepolymers having the same type of unsaturations and/or unsaturated monomers of the vinyl, acryl and allyl type;

c) photostarters characterized by the presence, in the molecule, of an optionally substituted benzoyl group;

d) salts of organic acids of transition metals or of metals of groups III A and IV A of the Periodic Table, capable of forming an oxido-reducing couple with peroxides;

e) pigments and/or fillers.

2. Painting products according to claim 1, characterized in that the solvent is selected from aromatic hydrocarbons, acetic acid esters or propionic acid esters and ketones, or mixtures thereof.

3. Painting products according to claim 1, characterized in that the physical drying resins are selected from nitrocellulose resins, vinyl and acrylic polymers and copolymers.

4. Painting products according to claim 1, characterized in that the unsaturated resins are unsaturated polyesters.

5. Painting products according to claim 1, characterized in that the unsaturated prepolymers are selected from epoxyacrylic prepolymers, urethaneacrylic prepolymers and polyacrylated polyester prepolymers.

6. Painting products according to claim 1, characterized in that the unsaturated monomers are selected from ethylacrylate, 1,6-hexandioldiacrylate, diethyleneglycol diacrylate, tripropylene glycoldiacrylate, bisphenoldiacrylate, diethyleneglycol bisallylether carbonate, trimethylol propane triacrylate, styrene, vinylacrylate, vinylpyrrolidone, trimethylolpropane diallyl ether and vinylcarbazole.

7. Painting products according to claim 1, characterized in that the photostarters are selected from thioxanthone, acetophenone, benzophenone, benzoine and acylphosphine oxide derivatives.

8. Painting products according to claim 1, characterized in that the salts of organic acids of metals soluble in the system are selected from octanoates, benzoates and naphthenates of cobalt, chromium, led, manganese, copper, iron, cerium, titanium, zirconium, vanadium, hafnium, niobium, zinc, aluminium, thallium.

9. Painting products according to claim 1, characterized in that the pigments are selected from titanium dioxide, carbon black, colored pigments, phthalocyanines and metal oxides.

10. Painting products according to claim 9, characterized in that the pigment amount contained in the dispersion is such as to prevent a deep cross-linking, by blocking the ultraviolet radiations in the surface layers.

11. Painting products according to claim 1, characterized in that the weight ratio between physical drying resins and unsaturated components is in the range of from 0.05 to 1.0, preferably from 0.1 to 0.2

12. Painting products according to claim 1, characterized in that the weight ratio between photostarters and unsaturated products ranges from 0.1 to 10%, preferably from 2 to 5%.

13. Painting products according to claim 1, characterized in that the weight ratio between photostarters and soluble metal organic salts ranges from 2 to 10, preferably from 4 to 7.

14. Process for obtaining painted surfaces exhibiting a corrugated decorative effect, characterized in that the substrate to be painted undergoes the following treating cycle:

a) application of a solution in an organic solvent of a physical drying resin and of an organic peroxide in an amount ranging from 1 to 3 g/sq.m of peroxide;

b) partial drying by heating to 40-50 °C for 60-100 seconds;

c) application of a painting product as per claims 1 to 13 in an amount ranging from 100 to 200 g/sq.m of wet film;

d) flash-off for 40-120 seconds at 20-30 °C;

e) ultraviolet irradiation by means of 80-120 W/cm lamps at a speed of 6-12 m/minute for 10-20 seconds;

f) final drying.

15. Process according to claim 14, characterized in that the utilized peroxides are selected from methylethyl ketone peroxide, cyclohexanone peroxide, acetyl acetone peroxide, benzoyl peroxide, cumene hydroperoxide.

16. Process according to claim 14, characterized in that the physical drying resin dissolved in the organic solvent along with the peroxide is a nitrocellulose resin.

17. Process according to claim 14, characterized in that the molar ratio between the organic peroxide and the organic acid salt of a transition metal or of a metal belonging to groups III A and IV A ranges from 1 to 15, preferably from 4 to 9.

18. Process according to claim 14, characterized in that the final drying is conducted by leaving the panels for 18 hours at room temperature in a ventilated place.

19. Process according to claim 14, characterized in that the final drying takes place in a furnace at 45-55 °C, with hot air circulation for 50-80 minutes.

Claims for the following Contracting States: GR, ES

1. Process for obtaining painted surfaces exhibiting a corrugated decorative effect, characterized in that the substrate to be painted undergoes the following treating cycle:

a) application of a solution in an organic solvent of a physical drying resin and of an organic peroxide in an amount ranging from 1 to 3 g/sq.m of peroxide;

b) partial drying by heating to 40-50 °C for 60-100 seconds;

c) application of a painting product as per claims 1 to 13 in an amount ranging from 100 to 200 g/sq.m of wet film;

d) flash-off for 40-120 seconds at 20-30 °C;

e) ultraviolet irradiation by means of 80-120 W/cm lamps at a speed of 6-12 m/minute for 10-20 seconds;

f) final drying.

2. Process according to claim 1, characterized in that the utilized peroxides are selected from methylethyl ketone peroxide, cyclohexanone peroxide, acetylacetone peroxide, benzoyl peroxide, cumene hydroperoxide.

3. Process according to claim 1, characterized in that the physical drying resin dissolved in the organic solvent along with the peroxide is a nitrocellulose resin.

4. Process according to claim 1, characterized in that the molar ratio between the organic peroxide and the organic acid salt of a transition metal or of a metal belonging to groups III A and IV A ranges from 1 to 15, preferably from 4 to 9.

5. Process according to claim 1, characterized in that the final drying is conducted by leaving the panels for 18 hours at room temperature in a ventilated place.

6. Process according to claim 1, characterized in that the final drying takes place in a furnace at 45-55 °C, with hot air circulation for 50-80 minutes.

European Patent Office

# EUROPEAN SEARCH REPORT

Application Number

EP 90 12 1669

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPIL, accession no. 82-82761E [39], Derwent Publications Ltd, London, GB; & JP-A-57 136 976 (NIPPON SYNTH. CHEM.) 24-08-1982<br>* Abstract *<br>----- | 1-8 | C 09 D 167/06<br>C 08 F 2/50 |
| | | | **TECHNICAL FIELDS SEARCHED (Int. Cl.5)** |
| | | | C 09 D |

The present search report has been drawn up for all claims

| Place of search | Date of completion of the search | Examiner |
|---|---|---|
| THE HAGUE | 14-02-1991 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document